# EUROPEAN PATENT SPECIFICATION

(11) **EP 2 531 450 B1**
(45) Date of publication and mention of the grant of the patent: **06.01.2016**
(21) Application number: 11710279.8
(22) Date of filing: 02.02.2011
(51) Int. Cl.: C02F 1/44, C02F 1/469, C02F 5/00, C02F 9/00, B01D 61/02, B01D 61/04, C02F 1/52

(54) **PLANT AND METHOD FOR PRODUCING DEMINERALIZED WATER, IN PARTICULAR FOR USE IN PLANTS FOR GENERATION OF ELECTRICAL ENERGY**
ANLAGE UND VERFAHREN ZUR HERSTELLUNG VON ENTMINERALISIERTEM WASSER, INSBESONDERE ZUR VERWENDUNG IN ANLAGEN ZUR STROMGEWINNUNG
INSTALLATION ET PROCÉDÉ POUR PRODUIRE DE L'EAU DÉMINÉRALISÉE, EN PARTICULIER POUR UNE UTILISATION DANS DES INSTALLATIONS POUR LA GÉNÉRATION D'ÉNERGIE ÉLECTRIQUE

(30) Priority: 02.02.2010 IT MI20100145
(43) Date of publication of application: 12.12.2012
(73) Proprietor: Ansaldo Energia S.p.A., Genova (IT)
(72) Inventor: PROVERA, Mauro, I-15100 Alessandria (IT); PERPIGLIA, Federica, I-16132 Genova (IT)
(74) Representative: Bergadano, Mirko
(86) International application number: PCT/IB2011/000161
(87) International publication number: WO 2011/095869

(56) References cited:
- EP-A1- 1 803 689
- JP-A- 2003 300 069
- JP-A- 2005 334 703

## Description

### TECHNICAL FIELD

The present invention relates to a plant and a method for producing demineralized water, in particular for use in plants for generation of electrical energy.

### BACKGROUND ART

It is known that in numerous industrial plants and in particular in plants for generation of electrical energy it is necessary to have available demineralized water in order to prevent the minerals normally present in raw water (for example, silica and silicates, calcium and magnesium carbonates, etc.) from causing damage or in any case creating problems in the equipment in which water is used.

Known to the art is, in particular, the use of demineralization plants comprising reverse-osmosis sections, associated to other treatment units. On account of the intrinsic characteristics of reverse-osmosis systems, the overall efficiency of these plants is not, however, fully satisfactory.

As is known, in fact, the reverse-osmosis process consists in a mechanical filtration carried out by organic semipermeable membranes, which enable passage of water from a more concentrated section to a more diluted section thanks to the application of a pressure higher than or equal to the natural osmotic pressure.

Two kinds of problems are involved in increasing the efficiency of the reverse-osmosis units in order to decrease the liquid discharge, which requires a final evaporation for disposal as solid waste (this process being highly costly both in terms of initial investment and in terms of management). The first kind of problem is of a physical nature, due to the fact that the reverse-osmosis process is a filtration of a tangential type and hence always entails a certain discharge flow and consequently a certain rate of outflow, which also has the purpose of eliminating the possible deposits that are formed on the membrane; however, if the flow decreases excessively also the rate of outflow undergoes the same decrease, and the system cannot function. In second kind of problem is of a chemical nature, linked to the solubility of the salts, which, once they have reached their limit, precipitate causing encrustations and hence the need for frequent replacement of the membranes.

The methods traditionally used in plants for generation of electrical energy to remove the silica from the raw water in general comprise a treatment conducted (on the entire flow of raw water) via clarifiers, which, typically, have large dimensions and low efficiency of abatement (normally not above 50%). In known treatments, solid reagents are used for joint abatement of permanent hardness, temporary hardness, and silica, with the addition of magnesium and lime in powder form. Of course, also the systems for dosage of the solid reagents used are of relatively large dimensions, as likewise the system for treating the sludge that is produced in large amounts, because it is necessary to abate both the hardness (calcium and magnesium salts) and the silica.

In addition to the drawbacks in terms of size of the equipment, the systems described above require the use of powdered lime and magnesium, which are, however, difficult to manage in so far as they tend in time to form encrustation and clog the charging and dispensing pipes, given that they (above all lime) are low-solubility products.

Other known schemes resort to softening units (where calcium and magnesium salts are substituted with sodium salts, which are more soluble than the former), which are set downstream or instead of the clarification unit and upstream of the reverse-osmosis section. The softened water enables increase of pH at input to the reverse-osmosis section and hence of the solubility of the silica, which in this way does not reach its limit of solubility and thus precipitate. The encrustations of the calcium and magnesium salts no longer constitute a danger given that they are totally removed in the softening units.

The major problem of this type of solutions is represented by the fact that the saline discharge coming from the regeneration processes cannot be discharged outside, other than by using a discharge-evaporation plant operating with high flowrates (and hence of large dimensions), with the consequent result of neutralizing any effort aimed at rendering the reverse-osmosis sections highly efficient.

The above mentioned drawbacks are not fully overcome by the process and plant disclosed by EP1803689A1, wherein water is demineralized by means of a reverse osmosis treatment section producing a permeate stream that is fed to an electrodeionization section, and a retentate stream that is fed to a crystallization section; nor by JP2003300069A and/or JP2005334703A, which disclose processes and plants in which silica is removed from a silica-containing water stream by chemical precipitation, for avoiding the scaling of the membranes in a following reverse osmosis unit.

### DISCLOSURE OF INVENTION

An aim of the present invention is to provide a plant and a method for producing demineralized water that will be free from the drawbacks of the known art highlighted herein; in particular, an aim of the invention is to provide a plant and a method that, as compared to known solutions, will increase the efficiency and reduce the flowrate of liquid discharge. According to the above purposes, the present invention regards a plant and a method for producing demineralized water, in particular for use in plants for generation of electrical energy, as defined in the annexed Claims 1 and 12, respectively, as well as, for the preferred additional features, in the dependent claims.

### DESCRIPTION OF THE DRAWINGS

The invention is further described in the ensuing non-limiting examples of embodiment, with reference to the annexed figures, wherein:
- Figure 1 is a schematic illustration of a plant for producing demineralized water according to the invention;
- Figure 2 is a schematic illustration of a detail of the plant of Figure 1.

### BEST MODE FOR CARRYING OUT THE INVENTION

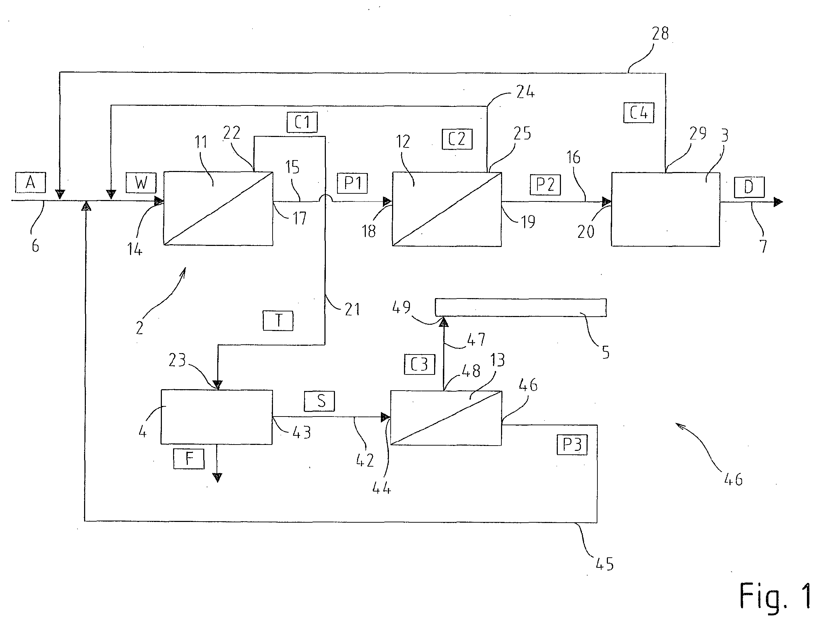

Designated as a whole by 1 in Figure 1 is a plant for producing demineralized water, in particular (but not necessarily) water to be used in a plant for generation of electrical energy.

The plant 1 mainly comprises a reverse-osmosis section 2, an electrodeionization section 3, and a system 4 for removal of silica; optionally, the plant comprises an evaporation section 5.

The plant 1 has a supply line 6, which carries a flow A of water to be treated into the plant 1, and a line 7 for outlet of demineralized water, via which a flow D of demineralized water produced in the plant 1 leaves the plant 1 and is made available for use.

The reverse-osmosis section 2 comprises three reverse-osmosis units 11, 12, 13, which produce respective concentrates and respective permeates; each unit 11, 12, 13 comprises one or more stages or modules formed by reverse-osmosis membranes, of a known type, also according to the chemical characteristics of the water to be treated (demineralized) in the plant 1.

The supply line 6 is connected to an inlet 14 of the unit 11 (which is also an inlet of the section 2) for feeding the unit 11 with a flow of water W to be treated constituted by the flow A with the addition of recirculation flows that will be described hereinafter.

The unit 11 produces a permeate P1, which supplies the unit 12, and a concentrate C1, which supplies the unit 13 after prior passage through the system 4 for removal of silica. The unit 12, fed with the permeate P1 of the unit 11, produces a permeate P2, which supplies the electrodeionization section 3, and a concentrate C2, which is recirculated at intake to the section 2, i.e., at the inlet 14, and added to the flow A. The unit 13, supplied with the concentrate C1 of the unit 11, which has passed through the system 4 for removal of silica, produces a permeate P3, which is recirculated at intake to the section 2, i.e., at the inlet 14, and added to the flow A, and a concentrate C3, which is sent to the evaporation section 5.

The units 11, 12, arranged in series with respect to the permeates, constitute the two initial units of the section 2, whereas the unit 13, set downstream of the system 4 for removal of silica, constitutes a reverse-osmosis refinement unit.

Two permeate-transfer lines 15, 16 connect in series with respect to the permeate, respectively, a permeate outlet 17 of the unit 11 to an inlet 18 of the unit 12 and a permeate outlet 19 of the unit 12 to an inlet 20 of the electrodeionization section 3.

A connection line 21 connects a concentrate outlet 22 of the unit 11 to an inlet 23 of the system 4 for removal of silica.

A recirculation line 24 connects a concentrate outlet 25 of the unit 12 to the supply line 6.

The electrodeionization section 3 comprises an electrodeionizer of any known type, for example constituted by a plurality of chambers filled with anionic/cationic resins (mixed beds) alternating with sectors without resin and occupied by concentrated solution. The chambers are separated by alternating cationic and anionic membranes, while an electrical field is applied across the electrodeionizer.

The section 3 produces the flow D of demineralized water to be used in the industrial plant in which the plant 1 is inserted, and a discharge concentrate C4, which is recovered at intake to the reverse-osmosis section 2, i.e., at the inlet 14, via a recirculation line 28, which connects a discharge outlet 29 of the section 3 to the supply line 6.

As is known, electrodeionization is a process that combines systems for refinement on mixed-bed ion-exchange resins (cationic and anionic resins) with electrodialysis systems (application of an electrical field for separating the ions). The electrodeionization process carried out in the section 3 removes the final saline residue still contained in the permeate P2 coming from the reverse-osmosis section 2 (precisely from the unit 12).

The section 3 does not produce any waste in so far as the discharge concentrate C4 is recirculated to the reverse-osmosis section 2. In the example shown in Figure 1, the concentrate C4 is recirculated at intake to the section 2, i.e., at the inlet 14 of the unit 11 (where it is added to the flow A), but could also be sent to the inlet 18 of the unit 12 (i.e., added to the permeate PI).

The-system 4 for removal of silica has mainly the function of removing the soluble silica and the silica in suspension to prevent clogging of the membranes of the reverse-osmosis refinement unit 13.

The system 4 is set, as shown in Figure 1, between the unit 11 and the unit 13 so as to treat the concentrate C1 produced in the unit 11; in this case, the line 21 connects the concentrate outlet 22 of the unit 11 to the inlet 23 of the system 4.

According to a variant not illustrated, the system 4 is set, instead, at intake to the plant 1 upstream of the entire reverse-osmosis section 2 in order to treat the flow A or the flow W directly. It remains in any case understood that yet other configurations may be envisaged and that the system 4 may hence be connected to the units 11, 12, 13 in other ways.

In general, the system 4 is traversed by a flow T of water to be treated in the system 4, constituted for example (but not necessarily) by the concentrate C1 (or else by the flow W containing the concentrate C2, or even by the concentrate C2), and comprises tanks in which processes of coagulation and/or flocculation are carried out via addition of coagulating agents and/or flocculating agents to the flow T to be treated. The coagulating agents and/or flocculating agents are designed to form respective colloidal systems in the flow T; each of them induces the separation of a solid phase of particles or flocculi dispersed (in suspension) in the liquid phase.

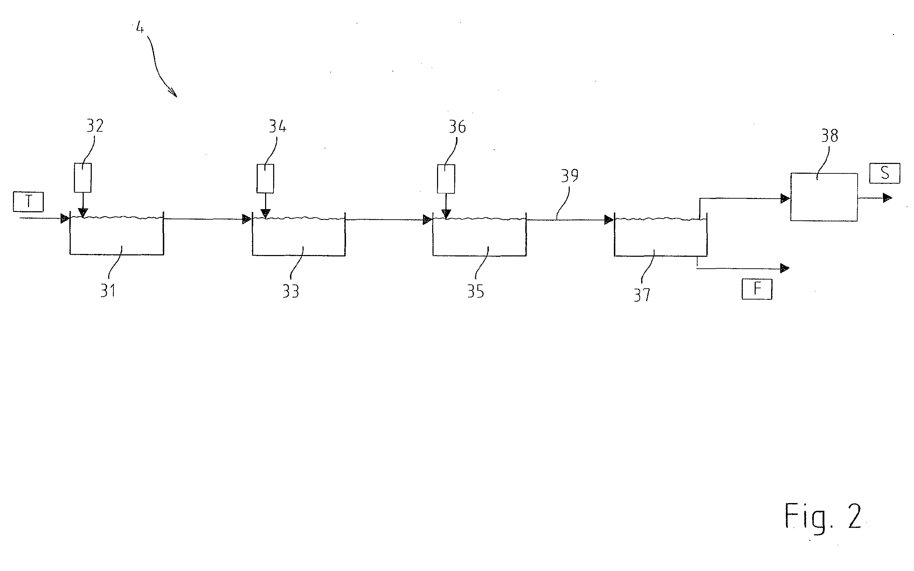

With reference also to Figure 2, the system 4 comprises, for example, a first coagulation tank 31 provided with a dispenser 32 of a liquid cationic coagulating agent, a second coagulation tank 33 provided with a dispenser 34 of a liquid anionic coagulating agent, a flocculation tank 35 provided with a dispenser 36 of a liquid flocculating agent, a clarification tank or clariflocculator 37, optionally an ultrafiltration unit 38, and a hydraulic circuit 39 that connects in series the tanks 31, 33, 35, 37 and possibly the ultrafiltration unit 38.

According to a preferred embodiment, the four tanks 31, 33, 35, 37 are constituted by respective compartments, in particular having a substantially rectangular shape, formed within a supporting structure defining a silica-abatement reactor; the tanks 31, 33, 35, 37 or compartments are preferably set alongside one another along an axis that defines a direction of flow (direction along which the flow being treated traverses the tanks) and have all a rectangular cross section.

The flow T to be treated in the system 4 enters the first coagulation tank 31 where the cationic coagulating agent is added, then passes in the second coagulation tank 33 where the anionic coagulating agent is added, and finally passes in the flocculation tank 35 where the flocculating agent is added.

In particular, the cationic coagulating agent is a liquid agent containing iron salts, in particular ferric salts (trivalent iron, Fe+++, salts); preferably, the cationic coagulating agent is ferric sulphate or ferric chloride.

The anionic coagulating agent is an agent containing aluminium salts and preferably trivalent aluminium (Al+++) salts; preferably, the anionic coagulating agent is sodium aluminate.

The final flocculating agent, which is optional, may be any known flocculating agent, preferably a liquid one, for example an anionic flocculating agent, in particular a polyacrylamide-based flocculating agent.

The two coagulating agents are dosed appropriately via the dispensers 32, 34 and are added separately to the flow T to be treated in successive steps (directly in the tanks 31, 33 or, preferably, to the respective intake lines), first one and then the other indifferently.

The flocculating agent is added in the tank 35 in yet a further step in order to increase coagulation of the flocculi formed in the previous tanks 31, 33 and thus enable their optimal subsequent precipitation.

The time of stay in the first tank is indicatively approximately 20 minutes; the tank is provided with a slow stirrer. The water overflows into the second tank where the anionic coagulating agent is dispensed.

In the second tank 33 the pH is brought to a value comprised between approximately 7.8 and approximately 8. The dosage of the coagulating agents and the rate of the flow T to be treated are regulated as a function of said value of pH. Also in the second tank 33, which is also provided with stirrer for applying a slow stirring, the stay time is indicatively approximately 20 minutes.

Dispensed in the third tank 35 is the flocculating agent, which enables final sedimentation of the flocculi in the fourth tank 37.

The flow T treated in the tanks 31, 33, 35 then enters the tank 37 (clariflocculator, in itself known), which is provided, for example, with a lamellar-pack sedimentator by which the sludge F is extracted. In the tank 37 the separation of sludge F produced in the tanks 31, 33, 35 (which deposit on the bottom of the clariflocculator 37) is performed by the clear water, which comes out from above the clariflocculator 37 and is sent to the ultrafiltration unit 38 (containing one or more ultrafiltration membranes) or to some other filtration unit (for example, a sand filtration unit), to prevent any problem of possible entraining of the flocculi. The sludge F is advantageously at least in part recirculated at intake to the system 4 in order to improve the efficiency, and is in part periodically extracted and sent to a drying system (known and not illustrated), for example to a thickener with a bottom shaped like a truncated pyramid, from which the sludge F is collected by being dropped in a dehydration system with filtering bags or of the filter-press type.

The dimensions of the reactor, i.e., principally of the tanks 31, 33, 35, 37, are calculated on the basis of the flowrate and so as to present a fixed ratio between length (linear length of the tanks 31, 33, 35, 37 along the longitudinal axis) and height that is approximately 1.7.

The efficiency of abatement of silica is higher than 90%.

The system 4 produces a flow S of desilicated water (i.e., substantially without silica), which is sent to the unit 13 via a connection line 42, which connects an outlet 43 of the system 4 to an inlet 44 of the unit 13 (Figure 1).

A recirculation line 45 connects a permeate outlet 46 of the unit 13 to the supply line 6.

A connection line 45 connects, instead, a concentrate outlet 48 of the unit 13 to an inlet 49 of the evaporation section 5.

The evaporation section 5 is of a known type operating at low temperature. For example, the section 5 comprises a(known) evaporator-crystallizer constituted by a nest of pipes or some other type of heat exchanger, in which the flow to be treated is brought into boiling conditions exploiting the heat of the steam produced, which yields its own heat to the flow to be treated and condenses.

Operation of the plant 1 that implements the method for producing demineralized water according to the invention is described in what follows.

The flow of water W to be treated (formed, for example, by the flow A of raw water, by the concentrates C2 and C4, and by the permeate P3) is supplied via the line 6 to the reverse-osmosis section 2 and specifically to the unit 11, where a first reverse-osmosis filtration step is carried out, which produces the permeate P1, which is sent to the second unit 12, and the concentrate C1, which is sent to the system 4 for removal of silica.

In the unit 12 a second reverse-osmosis filtration step is carried out in which the permeate P1 of the unit 11 is treated, and the permeate P2, which is sent to the electrodeionization section 3, and the concentrate C2, which is recirculated at intake to the section 2, are produced.

In the section 3 an electrodeionization step is carried out, which produces the flow D of demineralized water and the discharge concentrate C4, which is recirculated to the section 2.

The method comprises a step of removal of silica via the system 4.

In particular, the method comprises the steps of adding to the flow T to be treated coagulating and/or flocculating agents, exclusively in liquid form, designed to form respective colloidal systems in the flow T, and then feeding the unit 13 with the flow S of desilicated water produced in the system 4.

As has been described above, the coagulating agents and/or flocculating agents are added in respective distinct coagulation and/or flocculation tanks 31, 33, 35 set in series along the circuit 39.

The cationic coagulating agent and the anionic coagulating agent are added to the flow T separately from one another in respective distinct and successive steps, first one and then the other indifferently.

Also the flocculating agent is added separately, in a further step.

The flow T is then subjected to a step of clarification by sedimentation and to a step of ultrafiltration, which are carried out respectively in the clariflocculator 37 and in the ultrafiltration unit 38.

The flow S of desilicated water produced in the system 4 supplies the unit 13, in which a final reverse-osmosis filtration step produces the concentrate C3, which is sent to an evaporation step (carried out in the section 5 exclusively on the concentrate C3 produced in the unit 13), and the permeate P3, which is recirculated at intake to the section 2.

From what has been set forth above, the advantages of the present invention emerge clearly.

The invention affords, as compared to known solutions, a higher efficiency and a lower flow of liquid discharge.

In particular, the invention enables increase in the efficiency of the cold processes used in demineralization (principally the processes of reverse-osmosis filtration) in such a way as to prevent an excessive consumption of steam in the evaporation units used for minimizing the overall liquid discharge and recovering the residual water coming from the demineralization plant.

The invention enables treatment of a lower flow of the water used in electric power plants as compared to traditional schemes with considerably smaller size of the clarification plants. Also the efficiencies of abatement of the undesirable elements are higher, and this is due to the fact that a solution with lower concentration of elements to be abated is more difficult to treat as compared to a more concentrated solution, such as the one resulting from the first step of the demineralization unit.

Finally, it is understood that further modifications and variations may be made to the plant and method described and illustrated herein that do not depart from the scope of the annexed claims.

## Claims

1. A plant (1) for producing demineralized water, in particular for use in plants for generation of electrical energy, comprising a reverse-osmosis section (2) and an electrodeionization section (3) connected to the reverse-osmosis section (2) so as to treat a permeate (P2) produced in the reverse-osmosis section (2), the plant being **characterized in that**: the reverse-osmosis section (2) comprises at least a reverse-osmosis refinement unit (13) and a system (4) for removal of silica, set upstream of the reverse-osmosis refinement unit (13) and designed to remove silica from a flow of water (T) that traverses the system (4) for removal of silica, the system (4) for removal of silica being connected to the reverse-osmosis refinement unit (13) so as to feed the reverse-osmosis refinement unit (13) with a flow (S) of desilicated water produced in the system (4) for removal of silica; and the system (4) for removal of silica comprises at least three coagulation and/or flocculation tanks (31, 33, 35), which are set in series along a circuit (39) in which the flow of water (T) to be treated circulates and are provided with respective dispensers (32, 34, 36) for introducing in the tanks (31, 33, 35) and adding to the flow (T) respective coagulating agents and/or flocculating agents; the coagulating agents and/or flocculating agents being liquid agents designed to form respective colloidal systems in the flow (T); the reverse-osmosis section (2) comprising the reverse-osmosis refinement unit (13) and a first reverse-osmosis unit (11) and a second reverse-osmosis unit (12), which produce respective concentrates and respective permeates and are arranged in series with respect to the permeates and constitute the two initial units of the reverse-osmosis section (2) and are set downstream of the reverse-osmosis refinement unit (13) with respect to a permeate (P3) produced in the reverse-osmosis refinement unit (13), whereas the reverse-osmosis refinement unit (13) is set downstream of the system (4) for removal of silica; and the reverse-osmosis section (2) is configured and connected to the system (4) for removal of silica so that the reverse-osmosis refinement unit (13) is supplied with the concentrate (C1) of the first reverse-osmosis unit (11), which has passed through the system (4) for removal of silica, and produces a permeate (P3), which is recirculated at intake to the reverse-osmosis section (2), and a concentrate (C3), which is sent to an evaporation section (5).

2. The plant according to Claim 1, wherein the system (4) for removal of silica comprises a first coagulation tank (31) provided with a dispenser (32) of a liquid cationic coagulating agent, and a second coagulation tank (33) provided with a dispenser (34) of a liquid anionic coagulating agent.

3. The plant according to Claim 2, wherein the cationic coagulating agent is an agent containing iron salts, in particular ferric salts (salts of trivalent iron, Fe+++), preferably ferric sulphate or ferric chloride.

4. The plant according to Claim 2 or Claim 3, wherein the anionic coagulating agent is an agent containing aluminium salts, in particular trivalent aluminium (Al+++) salts, preferably sodium aluminate.

5. The plant according to any one of Claims 2 to 4, wherein the system (4) for removal of silica comprises a flocculation tank (35), set downstream of the coagulation tanks (31, 33) along the circuit (39) and provided with a dispenser (36) of a liquid flocculating agent.

6. The plant according to any one of Claims 2 to 5, wherein the system (4) for removal of silica comprises: a clarification tank or clariflocculator (37) set downstream of the coagulation and/or flocculation tanks (31, 33, 35) along the circuit (39) and designed to separate by sedimentation sludge (F) produced in the tanks (31, 33) by the flow (T); and a filtration unit (38), in particular an ultrafiltration unit, set downstream of the clariflocculator (37) along the circuit (39) for filtering the flow (T).

7. The plant according to any one of the preceding claims, comprising an evaporation section (5) set downstream of the reverse-osmosis refinement unit (13) and connected to the reverse-osmosis refinement unit (13) so as to be supplied exclusively with a concentrate (C3) produced in the reverse-osmosis refinement unit (13).

8. The plant according to any one of the preceding claims, wherein the system (4) for removal of silica is connected to the reverse-osmosis section (2) so as to be supplied with a concentrate (C1) produced in the first reverse-osmosis unit (11); the system (4) for removal of silica being configured so as to produce and separate from one another a flow (S) of desilicated water and sludge (F) containing silica.

9. The plant according to any one of the preceding claims, wherein the reverse-osmosis section (2) is configured and connected to the system (4) for removal of silica so that the first reverse-osmosis unit (11) produces a permeate (P1), which supplies the second reverse-osmosis unit (12) and a concentrate (C1), which supplies the reverse-osmosis refinement unit (13) after prior passage through the system (4) for removal of silica.

10. The plant according to any one of the preceding claims, wherein the reverse-osmosis section (2) is configured and connected to the electrodeionization section (3) so that the second reverse-osmosis unit (12) is supplied with the permeate (P1) of the first reverse-osmosis unit (11) and produces a permeate (P2), which supplies the electrodeionization section (3), and a concentrate (C2), which is recirculated at intake to the reverse-osmosis section (2).

11. The plant according to any one of the preceding claims, wherein the reverse-osmosis section (2) and the electrodeionization section (3) are configured and connected to one another so that the electrodeionization section (3) produces a flow (D) of demineralized water, and a discharge concentrate (C4), which is recirculated to an inlet (14) of the reverse-osmosis section (2) via a recirculation line (28).

12. A method for producing demineralized water, in particular for use in plants for generation of electrical energy, comprising the steps of circulating a flow of water (T) through a reverse-osmosis section (2) and an electrodeionization section (3) that treats a permeate (P2) produced in the reverse-osmosis section (2); the method being **characterized in that** it comprises a step of removal of silica from the flow (T) via a system (4) for removal of silica, and a reverse-osmosis filtration step conducted via a reverse-osmosis refinement unit (13), which is set downstream of the system (4) for removal of silica and is supplied with a flow (S) of desilicated water produced in the system (4) for removal of silica; and wherein the step of removal of silica comprises the step of adding to the flow (T) coagulating agents and/or flocculating agents, which are exclusively liquid agents designed to form respective colloidal systems in the flow (T) and are added in at least three respective distinct coagulation and/or flocculation tanks (31, 33, 35) set in series along a circuit (39) in which the flow (T) circulates; and wherein the reverse-osmosis section (2) comprises the reverse-osmosis refinement unit (13) and a first reverse-osmosis unit (11) and a second reverse-osmosis unit (12), which produce respective concentrates and respective permeates and are arranged in series with respect to the permeates and constitute the two initial units of the reverse-osmosis section (2) and are set downstream of the reverse-osmosis refinement unit (13) with respect to a permeate (P3) produced in the reverse-osmosis refinement unit (13), whereas the reverse-osmosis refinement unit (13) is set downstream of the system (4) for removal of silica; and the reverse-osmosis refinement unit (13) is supplied with the concentrate (C1) of the first reverse-osmosis unit (11), which has passed through the system (4) for removal of silica, and producing a permeate (P3), which is recirculated at intake to the reverse-osmosis section (2), and a concentrate (C3), which is sent to an evaporation section (5).

13. The method according to Claim 12, comprising the steps of: adding to the flow (T) a liquid cationic coagulating agent, and adding to the flow (T) a liquid anionic coagulating agent, which are added to the flow (T) separately from one another in respective distinct and successive steps, first one and then the other indifferently.

14. The method according to Claim 13, wherein the cationic coagulating agent is an agent containing iron salts, in particular ferric salts (trivalent iron, Fe+++, salts), preferably ferric sulphate or ferric chloride.

15. The method according to Claim 13 or Claim 14, wherein the anionic coagulating agent is an agent containing aluminium salts, in particular trivalent aluminium (Al+++) salts, preferably sodium aluminate.

16. The method according to any one of Claims 12 to 15, comprising a step of adding a liquid flocculating agent to the flow (T).

17. The method according to any one of Claims 12 to 16, comprising, after the step of adding coagulating agents and/or flocculating agents to the flow (T), a step of clarification by sedimentation and a filtration step.

18. The method according to any one of Claims 12 to 17, comprising an evaporation step conducted exclusively on a concentrate (C3) produced in the reverse-osmosis refinement unit (13).

19. The method according to any one of Claims 12 to 18, wherein the system (4) for removal of silica is supplied with a concentrate (C1) produced in the first reverse-osmosis unit (11) and produces and separates from one another a flow (S) of desilicated water and of sludge (F) containing silica.

20. The method according to any one of Claims 12 to 19, wherein the first reverse-osmosis unit (11) produces a permeate (P1), which supplies the second reverse-osmosis unit (12), and a concentrate (C1), which supplies the reverse-osmosis refinement unit (13) after prior passage through the system (4) for removal of silica.

21. The method according to any one of Claims 12 to 20, wherein the second reverse-osmosis unit (12) is supplied with the permeate (P1) of the first reverse-osmosis unit (11) and produces a permeate (P2), which supplies the electrodeionization section (3), and a concentrate (C2), which is recirculated at intake to the reverse-osmosis section (2).

22. The method according to any one of Claims 12 to 21, wherein the electrodeionization section (3) produces a flow (D) of demineralized water, and a discharge concentrate (C4), which is recirculated to an inlet (14) of the reverse-osmosis section (2).

## Patentansprüche

1. Anlage (1) zum Herstellen von demineralisiertem Wasser, insbesondere für die Verwendung in Anlagen zur Erzeugung von elektrischer Energie, die einen Umkehrosmose-Abschnitt (2) und einen Elektrodeionisations-Abschnitt (3) umfasst, der mit dem Umkehrosmose-Abschnitt (2) verbunden ist, um ein Permeat (P2), das in dem Umkehrosmose-Abschnitt (2) hergestellt wird, zu verarbeiten, wobei die Anlage **dadurch gekennzeichnet ist, dass**: der Umkehrosmose-Abschnitt (2) zumindest eine Umkehrosmose-Verfeinerungseinheit (13) und ein System (4) zur Entfernung von Siliziumdioxid, das sich vor der Umkehrosmose-Verfeinerungseinheit (13) befindet und entworfen ist, um Siliziumdioxid aus einer Wasserströmung (T), die das System (4) zur Entfernung von Siliziumdioxid durchläuft, zu entfernen, wobei das System (4) zur Entfernung von Siliziumdioxid mit der Umkehrosmose-Verfeinerungseinheit (13) verbunden ist, um die Umkehrosmose-Verfeinerungseinheit (13) mit einer Strömung (S) von desilifiziertem Wasser, das in dem System (4) zur Entfernung von Siliziumdioxid hergestellt wird, zu versorgen; und das System (4) zur Entfernung von Siliziumdioxid mindestens drei Koagulierungs- und/oder Ausflockungsbehälter (31, 33, 35) umfasst, die sich entlang eines Kreises (39), in dem die zu verarbeitende Wasserströmung (T) zirkuliert, in Reihe befinden und mit entsprechenden Spendern (32, 34, 36) versehen sind, um die entsprechenden Koagulierungsmittel und/oder Ausflockungsmittel in die Behälter (31, 33, 35) einzuleiten und der Strömung (T) hinzuzufügen; wobei die Koagulierungsmittel und/oder Ausflockungsmittel flüssige Mittel sind, die entworfen sind, um entsprechende Kolloidsysteme in der Strömung (T) auszubilden; wobei der Umkehrosmose-Abschnitt (2) die Umkehrosmose-Verfeinerungseinheit (13), eine erste Umkehrosmose-Einheit (11) und eine zweite Umkehrosmose-Einheit (12) umfasst, die die entsprechenden Konzentrate und die entsprechenden Permeate erzeugen, und bezüglich der Permeate in Reihe angeordnet sind, und die zwei Anfangseinheiten des Umkehrosmose-Abschnitts (2) bilden, und sich bezüglich eines Permeats (P3), das in der Umkehrosmose-Verfeinerungseinheit (13) hergestellt wird, hinter der Umkehrosmose-Verfeinerungseinheit (13) befinden, wohingegen sich die Umkehrosmose-Verfeinerungseinheit (13) hinter dem System (4) zur Entfernung von Siliziumdioxid befindet; und der Umkehrosmose-Abschnitt (2) konfiguriert ist und mit dem System (4) zur Entfernung von Siliziumdioxid verbunden ist, so dass die Umkehrosmose-Verfeinerungseinheit (13) mit dem Konzentrat (C1) der ersten Umkehrosmose-Einheit (11), das das System (4) zur Entfernung von Siliziumdioxid durchlaufen hat, versorgt wird und ein Permeat (P3), das zu dem Einlass in den Umkehrosmose-Abschnitt (2) zurückgeführt wird, und ein Konzentrat (C3), das an einen Verdampfungsabschnitt (5) geschickt wird, herstellt.

2. Anlage nach Anspruch 1, wobei das System (4) zur Entfernung von Siliziumdioxid einen ersten Koagulierungsbehälter (31), der mit einem Spender (32) für ein flüssiges kationisches Koagulierungsmittel versehen ist, und einen zweiten Koagulierungsbehälter (33), der mit einem Spender (34) für ein flüssiges anionisches Koagulierungsmittel versehen ist, umfasst.

3. Anlage nach Anspruch 2, wobei das kationische Koagulierungsmittel einem Mittel entspricht, das Eisensalze, insbesondere Ferrisalze (Salze des dreiwertigen Eisens, Fe⁺⁺⁺), vorzugsweise Ferrisulfate oder Ferrichloride, enthält.

4. Anlage nach Anspruch 2 oder Anspruch 3, wobei das anionische Koagulierungsmittel einem Mittel entspricht, das Aluminiumsalze, insbesondere Salze mit dreiwertigem Aluminium (Al⁺⁺⁺), vorzugsweise Natriumaluminat, enthält.

5. Anlage nach einem der Ansprüche 2 bis 4, wobei das System (4) zur Entfernung von Siliziumdioxid einen Ausflockungsbehälter (35) umfasst, der sich entlang des Kreises (39) hinter den Koagulierungsbehältern (31, 33) befindet und mit einem Spender (36) für ein flüssiges Ausflockungsmittel versehen ist.

6. Anlage nach einem der Ansprüche 2 bis 5, wobei das System (4) zur Entfernung von Siliziumdioxid Folgendes umfasst: einen Klärungsbehälter oder Klärungsflockulator (37), der sich entlang des Kreises (39) hinter den Koagulierungs- und/oder Ausflockungsbehältern (31, 33, 35) befindet und entworfen ist, um durch Sedimentation den Schlamm (F), der in den Behältern (31, 33) durch die Strömung (T) hergestellt wird, abzutrennen; und eine Filtrationseinheit (38), insbesondere eine Ultrafiltrationseinheit, die sich entlang des Kreises (39) hinter dem Klärungsflockulator (37) befindet, um die Strömung (T) zu filtern.

7. Anlage nach einem der vorhergehenden Ansprüche, die einen Verdampfungsabschnitt (5) umfasst, der sich hinter der Umkehrosmose-Verfeinerungseinheit (13) befindet und mit der Umkehrosmose-Verfeinerungseinheit (13) verbunden ist, um ausschließlich mit einem Konzentrat (C3) versorgt zu werden, das in der Umkehrosmose-Verfeinerungseinheit (13) hergestellt wird.

8. Anlage nach einem der vorhergehenden Ansprüche, wobei das System (4) zur Entfernung von Siliziumdioxid mit dem Umkehrosmose-Abschnitt (2) verbunden ist, um mit einem Konzentrat (C1) versorgt zu werden, das in der ersten Umkehrosmose-Einheit (11) hergestellt wird; wobei das System (4) zur Entfernung von Siliziumdioxid konfiguriert ist, um eine Strömung (S) aus desilifiziertem Wasser und Siliziumdioxid enthaltendem Schlamm (F) herzustellen und voneinander zu trennen.

9. Anlage nach einem der vorhergehenden Ansprüche, wobei der Umkehrosmose-Abschnitt (2) konfiguriert und mit dem System (4) zur Entfernung von Siliziumdioxid verbunden ist, so dass die erste Umkehrosmose-Einheit (11) ein Permeat (P1), das die zweite Umkehrosmose-Einheit (12) versorgt, und ein Konzentrat (C1) herstellt, das nach vorherigem Durchlaufen des Systems (4) zur Entfernung von Siliziumdioxid die Umkehrosmose-Verfeinerungseinheit (13) versorgt.

10. Anlage nach einem der vorhergehenden Ansprüche, wobei der Umkehrosmose-Abschnitt (2) derart konfiguriert und mit dem Elektrodeionisations-Abschnitt (3) verbunden ist, dass die zweite Umkehrosmose-Einheit (12) mit dem Permeat (P1) der ersten Umkehrosmose-Einheit (11) versorgt wird und ein Permeat (P2), das den Elektrodeionisations-Abschnitt (3) versorgt, und ein Konzentrat (C2), das an der Saugseite zu dem Umkehrosmose-Abschnitt (2) zurückgeführt wird, herstellt.

11. Anlage nach einem der vorhergehenden Ansprüche, wobei der Umkehrosmose-Abschnitt (2) und der Elektrodeionisations-Abschnitt (3) derart konfiguriert und miteinander verbunden sind, dass der Elektrodeionisations-Abschnitt (3) eine Strömung (D) von demineralisiertem Wasser und ein Ausgangskonzentrat (C4) herstellt, das mittels einer Rückführungsleitung (28) zu einem Einlass (14) des Umkehrosmose-Abschnitts (2) zurückgeführt wird.

12. Verfahren zum Herstellen von demineralisiertem Wasser, insbesondere für die Verwendung in Anlagen zur Erzeugung von elektrischer Energie, das den Schritt des Umwälzens einer Wasserströmung (T) durch einen Umkehrosmose-Abschnitt (2) und einen Elektrodeionisations-Abschnitt (3) umfasst, der ein Permeat (P2), das in dem Umkehrosmose-Abschnitt (2) hergestellt wird, verarbeitet; wobei das Verfahren **dadurch gekennzeichnet ist, dass** es einen Schritt des Entfernens von Siliziumdioxid aus der Strömung (T) mittels eines Systems (4) zur Entfernung von Siliziumdioxid und einen Umkehrosmose-Filtrationsschritt umfasst, der mittels einer Umkehrosmose-Verfeinerungseinheit (13) durchgeführt wird, die sich hinter dem System (4) zur Entfernung von Siliziumdioxid befindet und mit einer Strömung (S) von desilifiziertem Wasser, das in dem System (4) zur Entfernung von Siliziumdioxid hergestellt wird, versorgt wird; und wobei der Schritt des Entfernens von Siliziumdioxid den Schritt des Hinzufügens von Koagulierungsmitteln und/oder Ausflockungsmitteln zu der Strömung (T) umfasst, die ausschließlich flüssige Mittel sind, die entworfen sind, um entsprechende Kolloidsysteme in der Strömung (T) auszubilden, und in mindestens drei entsprechenden verschiedenen Koagulierungs- und/oder Ausflockungsbehältern (31, 33, 35), die sich entlang eines Kreises (39), in dem die Strömung (T) zirkuliert, in Reihe befinden, hinzugefügt werden; und wobei der Umkehrosmose-Abschnitt (2) die Umkehrosmose-Verfeinerungseinheit (13) und eine erste Umkehrosmose-Einheit (11) und eine zweite Umkehrosmose-Einheit (12) umfasst, die entsprechende Konzentrate und entsprechende Permeate erzeugen, und bezüglich der Permeate in Reihe angeordnet sind und die zwei Anfangseinheiten des Umkehrosmose-Abschnitts (2) bilden und sich bezüglich eines Permeats (P3), das in der Umkehrosmose-Verfeinerungseinheit (13) hergestellt wird, hinter der Umkehrosmose-Verfeinerungseinheit (13) befinden, wohingegen sich die Umkehrosmose-Verfeinerungseinheit (13) hinter dem System (4) zur Entfernung von Siliziumdioxid befindet; und wobei die Umkehrosmose-Verfeinerungseinheit (13) mit dem Konzentrat (C1) der ersten Umkehrosmose-Einheit (11), das das System (4) zur Entfernung von Siliziumdioxid durchlaufen hat, versorgt wird und ein Permeat (P3), das zu dem Einlass zu dem Umkehrosmose-Abschnitt (2) zurückgeführt wird, und ein Konzentrat (C3), das an einen Verdampfungsabschnitt (5) geschickt wird, herstellt.

13. Verfahren nach Anspruch 12, das die folgenden Schritte umfasst: Hinzufügen eines flüssigen kationischen Koagulierungsmittels zu der Strömung (T), und Hinzufügen eines flüssigen anionischen Koagulierungsmittels zu der Strömung (T), wobei diese der Strömung (T) getrennt voneinander in entsprechenden verschiedenen und aufeinanderfolgenden Schritten hinzugefügt werden, erst eines und anschließend davon unabhängig das andere.

14. Verfahren nach Anspruch 13, wobei das kationische Koagulierungsmittel einem Mittel entspricht, das Eisensalze, insbesondere Ferrisalze (Salzen des dreiwertigen Eisens, Fe⁺⁺⁺), vorzugsweise Ferrisulfate oder Ferrichloride, enthält.

15. Verfahren nach Anspruch 13 oder Anspruch 14, wobei das anionische Koagulierungsmittel einem Mittel entspricht, das Aluminiumsalze, insbesondere Salze mit dreiwertigem Aluminium (Al⁺⁺⁺), vorzugsweise Natriumaluminat, enthält.

16. Verfahren nach einem der Ansprüche 12 bis 15, das einen Schritt des Hinzufügens eines flüssigen Ausflockungsmittels zu der Strömung (T) umfasst.

17. Verfahren nach einem der Ansprüche 12 bis 16, das nach dem Schritt des Hinzufügens von Koagulierungsmitteln und/oder Ausflockungsmitteln zu der Strömung (T) einen Schritt des Klärens durch Sedimentation und einen Filtrationsschritt umfasst.

18. Verfahren nach einem der Ansprüche 12 bis 17, das einen Verdampfungsschritt umfasst, der ausschließlich auf einem Konzentrat (C3) durchgeführt wird, das in der Umkehrosmose-Verfeinerungseinheit (13) hergestellt wird.

19. Verfahren nach einem der Ansprüche 12 bis 18, wobei das System (4) zur Entfernung von Siliziumdioxid mit einem Konzentrat (C1) versorgt wird, das in der ersten Umkehrosmose-Einheit (11) hergestellt wird, und eine Strömung (S) aus desilifiziertem Wasser und Siliziumdioxid enthaltendem Schlamm (F) herstellt und voneinander trennt.

20. Verfahren nach einem der Ansprüche 12 bis 19, wobei die erste Umkehrosmose-Einheit (11) ein Permeat (P1), das die zweite Umkehrosmose-Einheit (12) versorgt, und ein Konzentrat (C1), das nach vorherigem Durchlaufen des Systems (4) zur Entfernung von Siliziumdioxid die Umkehrosmose-Verfeinerungseinheit (13) versorgt, herstellt.

21. Verfahren nach einem der Ansprüche 12 bis 20, wobei die zweite Umkehrosmose-Einheit (12) mit dem Permeat (P1) der ersten Umkehrosmose-Einheit (11) versorgt wird und ein Permeat (P2), das den Elektrodeionisations-Abschnitt (3) versorgt, und ein Konzentrat (C2), das an der Saugseite zu dem Umkehrosmose-Abschnitt (2) zurückgeführt wird, herstellt.

22. Verfahren nach einem der Ansprüche 12 bis 21, wobei der Elektrodeionisations-Abschnitt (3) eine Strömung (D) aus demineralisiertem Wasser und ein Ausgangskonzentrat (C4), das zu einem Einlass (14) des Umkehrosmose-Abschnitts (2) zurückgeführt wird, herstellt.

## Revendications

1. Installation (1) pour produire de l'eau déminéralisée, en particulier pour une utilisation dans des installations pour la génération d'énergie électrique, comprenant une section d'osmose inverse (2) et une section d'électrodésionisation (3) reliée à la section d'osmose inverse (2) de manière à traiter un perméat (P2) produit dans la section d'osmose inverse (2), l'installation étant **caractérisée en ce que** : la section d'osmose inverse (2) comprend au moins une unité de purification par osmose inverse (13) et un système (4) pour le retrait de silice, placé en amont de l'unité de purification par osmose inverse (13) et conçu pour retirer la silice d'un écoulement d'eau (T) qui traverse le système (4) pour le retrait de silice, le système (4) pour le retrait de silice étant relié à l'unité de purification par osmose inverse (13) de manière à fournir, à l'unité de purification par osmose inverse (13), un écoulement (S) d'eau désilicatée produite dans le système (4) pour le retrait de silice ; et le système (4) pour le retrait de silice comprend au moins trois cuves de coagulation et/ou de floculation (31, 33, 35), qui sont placées en série le long d'un circuit (39) dans lequel l'écoulement d'eau (T) à traiter circule et qui sont pourvus de distributeurs (32, 34, 36) respectifs pour introduire dans les cuves (31, 33, 35) et ajouter à l'écoulement (T) des agents de coagulation et/ou des agents de floculation respectifs ; les agents de coagulation et/ou les agents de floculation étant des agents liquides conçus pour former des systèmes colloïdaux respectifs dans l'écoulement (T) ; la section d'osmose inverse (2) comprenant l'unité de purification par osmose inverse (13) et une première unité d'osmose inverse (11) et une deuxième unité d'osmose inverse (12), qui produisent des concentrés respectifs et des perméats respectifs et qui sont agencées en série par rapport aux perméats et qui constituent les deux unités initiales de la section d'osmose inverse (2) et qui sont placées en aval de l'unité de purification par osmose inverse (13) par rapport à un perméat (P3) produit dans l'unité de purification par osmose inverse (13), tandis que l'unité de purification par osmose inverse (13) est placée en aval du système (4) pour le retrait de silice ; et la section d'osmose inverse (2) est configurée et reliée au système (4) pour le retrait de silice de sorte que l'unité de purification par osmose inverse (13) reçoive le concentré (C1) de la première unité d'osmose inverse (11), qui est passé à travers le système (4) pour le retrait de silice, et produise un perméat (P3), qui est amené à recirculer au niveau de l'entrée vers la section d'osmose inverse (2), et un concentré (C3), qui est envoyé à une section d'évaporation (5).

2. Installation selon la revendication 1, dans laquelle le système (4) pour le retrait de silice comprend une première cuve de coagulation (31) pourvue d'un distributeur (32) d'un agent de coagulation cationique liquide, et une deuxième cuve de coagulation (33) pourvue d'un distributeur (34) d'un agent de coagulation anionique liquide.

3. Installation selon la revendication 2, dans laquelle l'agent de coagulation cationique est un agent contenant des sels de fer, en particulier des sels ferriques (des sels de fer trivalent, Fe+++), de préférence du sulfate ferrique ou du chlorure ferrique.

4. Installation selon la revendication 2 ou la revendication 3, dans laquelle l'agent de coagulation anionique est un agent contenant des sels d'aluminium, en particulier des sels d'aluminium trivalent (Al+++), de préférence de l'aluminate de sodium.

5. Installation selon l'une quelconque des revendications 2 à 4, dans laquelle le système (4) pour le retrait de silice comprend une cuve de floculation (35), placée en aval des cuves de coagulation (31, 33) le long du circuit (39) et pourvu d'un distributeur (36) d'un agent de floculation liquide.

6. Installation selon l'une quelconque des revendications 2 à 5, dans laquelle le système (4) pour le retrait de silice comprend : une cuve de clarification ou un floculateur clarificateur (37) placé en aval des cuves de coagulation et/ou de floculation (31, 33, 35) le long du circuit (39) et conçu pour séparer par sédimentation la boue (F) produite dans les cuves (31, 33) par l'écoulement (T) ; et une unité de filtration (38), en particulier une unité d'ultrafiltration, placée en aval du floculateur clarificateur (37) le long du circuit (39) pour la filtration de l'écoulement (T).

7. Installation selon l'une quelconque des revendications précédentes, comprenant une section d'évaporation (5) placée en aval de l'unité de purification par osmose inverse (13) et reliée à l'unité de purification par osmose inverse (13) de manière à recevoir exclusivement un concentré (C3) produit dans l'unité de purification par osmose inverse (13).

8. Installation selon l'une quelconque des revendications précédentes, dans laquelle le système (4) pour le retrait de silice est relié à la section d'osmose inverse (2) de manière à recevoir un concentré (C1) produit dans la première unité d'osmose inverse (11) ; le système (4) pour le retrait de silice étant configuré de manière à produire et séparer l'un de l'autre un écoulement (S) d'eau désilicatée et une boue (F) contenant la silice.

9. Installation selon l'une quelconque des revendications précédentes, dans laquelle la section d'osmose inverse (2) est configurée et reliée au système (4) pour le retrait de silice de sorte que la première unité d'osmose inverse (11) produise un perméat (P1), qui est fourni à la deuxième unité d'osmose inverse (12), et un concentré (C1), qui est fourni à l'unité de purification par osmose inverse (13) après un passage préalable à travers le système (4) pour le retrait de silice.

10. Installation selon l'une quelconque des revendications précédentes, dans laquelle la section d'osmose inverse (2) est configurée et reliée à la section d'électrodésionisation (3) de sorte que la deuxième unité d'osmose inverse (12) reçoive le perméat (P1) de la première unité d'osmose inverse (11) et produise un perméat (P2), qui est fourni à la section d'électrodésionisation (3), et un concentré (C2), qui est amené à recirculer au niveau de l'entrée vers la section d'osmose inverse (2).

11. Installation selon l'une quelconque des revendications précédentes, dans laquelle la section d'osmose inverse (2) et la section d'électrodésionisation (3) sont configurées et reliées l'une à l'autre de sorte que la section d'électrodésionisation (3) produise un écoulement (D) d'eau déminéralisée, et un concentré de décharge (C4), qui est amené à recirculer vers une entrée (14) de la section d'osmose inverse (2) par l'intermédiaire d'une conduite de recirculation (28).

12. Procédé pour produire de l'eau déminéralisée, en particulier pour une utilisation dans des installations pour la génération d'énergie électrique, comprenant les étapes de mise en circulation d'un écoulement d'eau (T) à travers une section d'osmose inverse (2) et une section d'électrodésionisation (3) qui traite un perméat (P2) produit dans la section d'osmose inverse (2) ; le procédé étant **caractérisé en ce qu'**il comprend une étape de retrait de la silice de l'écoulement (T) par l'intermédiaire d'un système (4) pour le retrait de silice, et une étape de filtration par osmose inverse effectuée par une unité de purification par osmose inverse (13), qui est placée en aval du système (4) pour le retrait de silice et qui reçoit un écoulement (S) d'eau désilicatée produite dans le système (4) pour le retrait de silice ; et dans lequel l'étape de retrait de silice comprend l'étape d'ajout à l'écoulement (T) d'agents de coagulation et/ou d'agents de floculation, qui sont exclusivement des agents liquides conçus pour former des systèmes colloïdaux respectifs dans l'écoulement (T) et qui sont ajoutés dans au moins trois cuves de coagulation et/ou de floculation (31, 33, 35) distincts respectifs placés en série le long d'un circuit (39) dans lequel l'écoulement (T) circule ; et dans lequel la section d'osmose inverse (2) comprend l'unité de purification par osmose inverse (13) et une première unité d'osmose inverse (11) et une deuxième unité d'osmose inverse (12), qui produisent des concentrés respectifs et des perméats respectifs et qui sont agencées en série par rapport aux perméats et constituent les deux unités initiales de la section d'osmose inverse (2) et qui sont placées en aval de l'unité de purification par osmose inverse (13) par rapport à un perméat (P3) produit dans l'unité de purification par osmose inverse (13), tandis que l'unité de purification par osmose inverse (13) est placée en aval du système (4) pour le retrait de silice ; et l'unité de purification par osmose inverse (13) reçoit le concentré (C1) de la première unité d'osmose inverse (11), qui est passé à travers le système (4) pour le retrait de silice, et produit un perméat (P3), qui est amené à recirculer au niveau de l'entrée vers la section d'osmose inverse (2), et un concentré (C3), qui est envoyé à une section d'évaporation (5).

13. Procédé selon la revendication 12, comprenant les étapes : d'ajout à l'écoulement (T) d'un agent de coagulation cationique liquide, et d'ajout à l'écoulement (T) d'un agent de coagulation anionique liquide, qui sont ajoutés à l'écoulement (T) séparément l'un de l'autre à des étapes distinctes et successives respectives, l'un en premier et ensuite l'autre indifféremment.

14. Procédé selon la revendication 13, dans lequel l'agent de coagulation cationique est un agent contenant des sels de fer, en particulier des sels ferriques (des sels de fer trivalent, Fe+++), de préférence du sulfate ferrique ou du chlorure ferrique.

15. Procédé selon la revendication 13 ou la revendication 14, dans lequel l'agent de coagulation anionique est un agent contenant des sels d'aluminium, en particulier des sels d'aluminium trivalent (Al+++), de préférence de l'aluminate de sodium.

16. Procédé selon l'une quelconque des revendications 12 à 15, comprenant une étape d'ajout d'un agent de floculation liquide à l'écoulement (T).

17. Procédé selon l'une quelconque des revendications 12 à 16, comprenant, après l'étape d'ajout d'agents de coagulation et/ou d'agents de floculation à l'écoulement (T), une étape de clarification par sédimentation et une étape de filtration.

18. Procédé selon l'une quelconque des revendications 12 à 17, comprenant une étape d'évaporation effectuée exclusivement sur un concentré (C3) produit dans l'unité de purification par osmose inverse (13).

19. Procédé selon l'une quelconque des revendications 12 à 18, dans lequel le système (4) pour le retrait de silice reçoit un concentré (C1) produit dans la première unité d'osmose inverse (11) et produit et sépare l'un de l'autre un écoulement (S) d'eau désilicatée et de boue (F) contenant la silice.

20. Procédé selon l'une quelconque des revendications 12 à 19, dans lequel la première unité d'osmose inverse (11) produit un perméat (P1), qui est fourni à la deuxième unité d'osmose inverse (12), et un concentré (C1), qui est fourni à l'unité de purification par osmose inverse (13) après un passage préalable à travers le système (4) pour le retrait de silice.

21. Procédé selon l'une quelconque des revendications 12 à 20, dans lequel la deuxième unité d'osmose inverse (12) reçoit le perméat (P1) de la première unité d'osmose inverse (11) et produit un perméat (P2), qui est fourni à la section d'électrodésionisation (3), et un concentré (C2), qui est amené à recirculer au niveau de l'entrée vers la section d'osmose inverse (2).

22. Procédé selon l'une quelconque des revendications 12 à 21, dans lequel la section d'électrodésionisation (3) produit un écoulement (D) d'eau déminéralisée, et un concentré de décharge (C4), qui est amené à recirculer vers une entrée (14) de la section d'osmose inverse (2).
